# EUROPEAN PATENT APPLICATION

(11) **EP 2 869 216 A1**
(43) Date of publication of application: **06.05.2015**
(21) Application number: 13810330.4
(22) Date of filing: 08.05.2013
(51) Int. Cl.: G06F 17/30

(54) **RELATED CONTENT RETRIEVAL DEVICE AND RELATED CONTENT RETRIEVAL METHOD**

(30) Priority: 27.06.2012 JP 2012144423
(71) Applicant: NTT Docomo, Inc., Tokyo 100-6150 (JP)
(72) Inventor: YAMADA Hisashi, Tokyo 100-6150 (JP); YAMADA Naoharu, Tokyo 100-6150 (JP); HARA Mirai, Tokyo 100-6150 (JP); KATSUMARU Norihiro, Tokyo 100-6150 (JP)
(74) Representative: Viering, Jentschura & Partner Patent- und Rechtsanwälte
(86) International application number: PCT/JP2013/062926
(87) International publication number: WO 2014/002614

(57) **Abstract**

An object is to retrieve a wide variety of related contents. A related content retrieval device 1 has: an input unit 10 for implementing input of a content; a metadata acquisition unit 11 for acquiring metadata of the content input by the input unit 10; a posted text acquisition unit 12 for acquiring a posted text related to the metadata acquired by the metadata acquisition unit 11, from a posting server 31 accumulating user posted texts; a related content acquisition unit 13 for acquiring a related content related to the posted text acquired by the posted text acquisition unit 12, from a retrieval server 30 capable of retrieving a content on a network device 3; and an output unit 14 for outputting the related content acquired by the related content acquisition unit 13.

## Description

### Technical Field

The present invention relates to a related content retrieval device and a related content retrieval method for retrieving a related content to an input content.

### Background Art

A retrieval keyword has been used heretofore in retrieval of a related image. For example, disclosed in the image retrieval device described in Patent Literature 1 is the technology of providing a keyword to image data, in order to enable easy retrieval of the image data with use of the keyword.

### Citation List

### Patent Literature

Patent Literature 1: Japanese Patent Application Laid-open Publication No. 2005-352782

### Summary of Invention

### Technical Problem

However, in the case where the retrieval of related image was carried out with the use of the retrieval keyword, it was possible to retrieve only an image or images related to the retrieval keyword but it was not possible to retrieve a wide variety of related images.

Therefore, the present invention has been accomplished in view of the above problem and it is an object of the present invention to provide a related content retrieval device and a related content retrieval method capable of retrieving a wide variety of related contents.

### Solution to Problem

In order to solve the above problem, a related content retrieval device according to one aspect of the present invention is a related content retrieval device comprising: input means for implementing input of a content; metadata acquisition means for acquiring metadata of the content input by the input means; posted text acquisition means for acquiring a posted text related to the metadata acquired by the metadata acquisition means, from a posting server accumulating user posted texts; related content acquisition means for acquiring a related content related to the posted text acquired by the posted text acquisition means, from a retrieval server capable of retrieving a content on a network; and output means for outputting the related content acquired by the related content acquisition means.

A related content retrieval method according to one aspect of the present invention is a related content retrieval method by a related content retrieval device, comprising: an input step in which input means of the related content retrieval device implements input of a content; a metadata acquisition step in which metadata acquisition means of the related content retrieval device acquires metadata of the content input in the input step; a posted text acquisition step in which posted text acquisition means of the related content retrieval device acquires a posted text related to the metadata acquired in the metadata acquisition step, from a posting server accumulating user posted texts; a related content acquisition step in which related content acquisition means of the related content retrieval device acquires a related content related to the posted text acquired in the posted text acquisition step, from a retrieval server capable of retrieving a content on a network; and an output step in which output means of the related content retrieval device outputs the related content acquired in the related content acquisition step.

In the related content retrieval device and related content retrieval method as described above, first, the input means implements input of a content. Then the metadata acquisition means acquires metadata of the input content. Then the posted text acquisition means acquires a posted text related to the acquired metadata, from the posting server accumulating the user posted texts. Then the related content acquisition means acquires a related content related to the acquired posted text, from the retrieval server capable of retrieving a content on the network. Then the output means outputs the acquired related content. By adopting this configuration, the related content to the input content is acquired and output based on the posted text on the posting server related to the input content, whereby it becomes possible to retrieve a wide variety of related contents based on the posted texts. Furthermore, use of metadata also allows retrieval of related contents to various contents such as images including no retrieval keyword of text data or the like.

In the related content retrieval device according to one aspect of the present invention, the output means may be configured to output the related content and also output the posted text as the source of relation with the related content. By adopting this configuration, for example, a user is allowed to view the related content and the posted text as the source of relation with the related content together and thus can further obtain detailed information about the related content, with improvement in convenience of the user.

In the related content retrieval device according to one aspect of the present invention, the related content acquisition means may be configured to generate a retrieval keyword, based on the posted text acquired by the posted text acquisition means, and to perform retrieval using the generated retrieval keyword to acquire the related content from the retrieval server. By adopting this configuration, the retrieval of the related content can be implemented by preparing the retrieval server a general retrieval function capable of retrieving a content with use of a retrieval keyword, whereby there is no need for preparing a dedicated retrieval function and the related content can be retrieved at low cost. In the related content retrieval device according to one aspect of the present invention, the posting server may be configured to accumulate user's action schedules, the posted text acquisition means may be configured to acquire an action schedule related to the metadata acquired by the metadata acquisition means, from the posting server, and the related content acquisition means may be configured to acquire a related content related to the action schedule acquired by the posted text acquisition means, from the retrieval server. In the related content retrieval device according to one aspect of the present invention, the input means may be configured to implement input of an image, the metadata acquisition means may be configured to acquire a date and time of photography as metadata of the image input by the input means, and the posted text acquisition means may be configured to acquire an action schedule related to the date and time of photography acquired by the metadata acquisition means, from the posting server.

### Advantageous Effect of Invention

The present invention has made it feasible to retrieve a wide variety of related contents.

### Brief Description of Drawings

Fig. 1 is a schematic drawing of a related content retrieval system and a function block diagram of a related content retrieval device according to an embodiment of the present invention.
Fig. 2 is a drawing showing a hardware configuration of the related content retrieval device according to the embodiment of the present invention.
Fig. 3 is a sequence diagram showing a processing procedure of a related content retrieval method executed in the related content retrieval system according to the embodiment of the present invention.
Fig. 4 is a drawing showing a screen example in input of an image at a terminal according to the embodiment of the present invention.
Fig. 5 is a drawing showing a screen example in output of related images at the terminal according to the embodiment of the present invention.

### Description of Embodiments

Embodiments of the related content retrieval device and related content retrieval method will be described below in detail with the drawings. In the description of the drawings the same elements will be denoted by the same reference signs, without redundant description.

### [Configuration of Related Content Retrieval System 4]

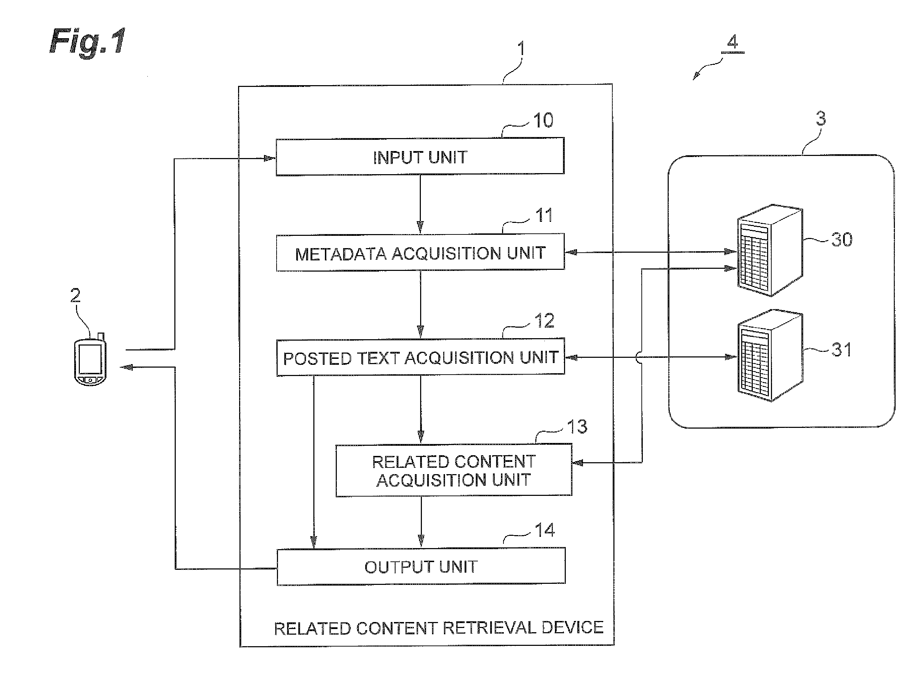

First, a configuration of a related content retrieval system 4 will be described. Fig. 1 is a schematic drawing of the related content retrieval system 4 including a related content retrieval device 1, a terminal 2, and a network device 3 according to the present embodiment. The related content retrieval device 1, terminal 2, and network device 3 shown in Fig. 1 are connected to each other through a network such as the Internet or phone lines so as to be communicable with each other.

The related content retrieval device 1 is a device that retrieves a related content to an input content, and its configuration will be detailed later. The "content" in the present embodiment refers to a general content such as a text, an image (photograph), music, or a video.

The terminal 2 is a mobile terminal such as a smartphone. A user of the terminal 2 makes a request for retrieval of a related content through the terminal 2 to the related content retrieval device 1 and views the result of the retrieval on a screen of the terminal 2. The terminal 2 does not have to be limited to the mobile terminal but may be a PC (Personal Computer) or the like. Furthermore, Fig. 1 shows one terminal 2 but the system may include a plurality of terminals.

The network device 3 includes a retrieval server 30 and a posting server 31, as shown in Fig. 1.

The retrieval server 30 is a server that is managed by an operator responsible for management and operation of the communication network used by the terminal 2. The retrieval server 30 stores contents managed by the user of the terminal 2. With an acquisition request or a retrieval request for a content from the related content retrieval device 1 or from the terminal 2, the retrieval server 30 returns the content in storage. Furthermore, with a storage request for a content from the related content retrieval device 1 or from the terminal 2, the retrieval server 30 stores the content. It is noted that the retrieval server 30 does not have to be limited to the server managed by the operator responsible for management and operation of the communication network but may be a general server that manages the contents managed by the user of the terminal 2.

The posting server 31 is a server that accumulates user posted texts. The posting server 31 is, for example, a server that accumulates user generated contents (UGC: User Generated Content), such as a schedule server which manages schedule information including user's action schedules and dates and times, an SNS (Social Networking Service) server which manages contents such as user's blog, comments, and images, a short-message posting server which allows posting of short messages called "tweets," a bulletin board server, a blog server, or a video sharing server. Although the posting server 31 shown in Fig. 1 is a single server, the system may include a plurality of posting servers. The posting server 31 in the present embodiment includes a plurality of servers such as the aforementioned schedule server and SNS server, which will be collectively called "posting server 31."

### [Configuration of Related Content Retrieval Device 1]

The following will describe the configuration of the related content retrieval device 1. Fig. 1 further shows the function block diagram showing the configuration of the related content retrieval device 1 according to the present embodiment. As shown in Fig. 1, the related content retrieval device 1 is configured including an input unit 10 (input means), a metadata acquisition unit 11 (metadata acquisition means), a posted text acquisition unit 12 (posted text acquisition means), a related content acquisition unit 13 (related content acquisition means), and an output unit 14 (output means).

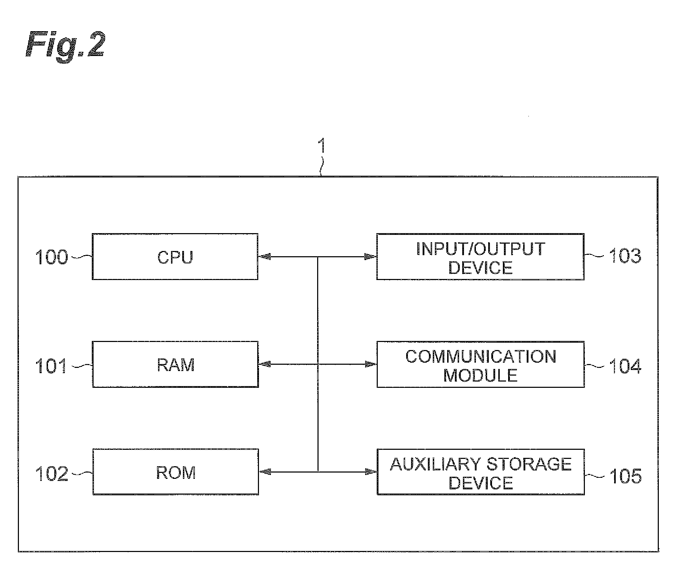

The related content retrieval device 1 is a device that is constructed of hardware such as a CPU. Fig. 2 is a drawing showing an example of a hardware configuration of the related content retrieval device 1. The related content retrieval device 1 shown in Fig. 1 is configured, from the physical view, as a computer system including a CPU 100, a RAM 101 and a ROM 102 as main storage devices, an input/output device 103 such as a numeric keypad and a display, a communication module 104, and an auxiliary storage device 105.

Functions of the respective function blocks of the related content retrieval device 1 shown in Fig. 1 are realized by loading predetermined computer software on the hardware such as the CPU 100 and RAM 101 shown in Fig. 2, thereby operating the input/output device 103, communication module 104, and auxiliary storage device 105 under control of the CPU 100, and performing reading and writing of data from and into the RAM 101.

Each of the function blocks of the related content retrieval device 1 shown in Fig. 1 will be described below.

### The input unit 10 implements input of a content. Specifically, the input unit 10 receives input of a content for retrieval of a related content or identification information of the content, from the terminal 2.

The metadata acquisition unit 11 acquires metadata of the content input by the input unit 10. The metadata of the content is additional data related to the content and is embedded in data of the content. For example, the metadata of an image includes a tag (information about the image given by the user), a date and time of photography, a storing folder name, an SNS service name of an image posting destination, a posted message ID in posting on SNS, and so on.

For example, when the input unit 10 implements input of an image, the metadata acquisition unit 11 acquires the metadata embedded in image data. When the input unit 10 implements input of an image ID, the metadata acquisition unit 11 acquires an image corresponding to the image ID from the retrieval server 30 or the like, and acquires the metadata embedded in image data of the image thus acquired.

The posted text acquisition unit 12 acquires a posted text related to the metadata acquired by the metadata acquisition unit 11, from the posting server 31. Specifically, the posted text acquisition unit 12 performs retrieval over the posting server 31, using the metadata acquired by the metadata acquisition unit 11, as a retrieval keyword, to acquire the related posted text as the result of the retrieval. Examples of the posted text herein include user's action schedule, date and time, and location information on the schedule server, user posted content, posted comment, posting date and time, and location information on the SNS server, a posted short message on the short-message posting server, a posted comment on the bulletin board server, a posted content, posted comment, and posting date and time on the blog server, a posted comment on the video sharing server, and so on.

The related content acquisition unit 13 acquires a related content related to the posted text acquired by the posted text acquisition unit 12, from the retrieval server 30. Specifically, the related content acquisition unit 13 generates a retrieval keyword, based on the posted text acquired by the posted text acquisition unit 12, and performs retrieval using the generated retrieval keyword to acquire the related content from the retrieval server. The related content acquisition unit 13 may perform a morphological analysis to extract a word, on the occasion of generating the retrieval keyword based on the posted text. Examples of the word herein include nouns (general noun, proper noun, verbal, stem of adjectival noun), verbs (free), adjectives (free), and interjections. It is noted that the process of generating the retrieval keyword based on the posted text may be performed by the retrieval server 30. In that case, the related content acquisition unit 13 transmits the posted text to the retrieval server 30 and acquires the related content as the result of the retrieval from the retrieval server 30.

The related content acquisition unit 13 may acquire as the related content a content related to the metadata acquired by the metadata acquisition unit 11, from the retrieval server 30. Furthermore, the foregoing described the example wherein the related content acquisition unit 13 acquired the related content from the retrieval server 30, but how to acquire the related content does not have to be limited to this example. For example, the related content acquisition unit 13 may acquire the related content from a general retrieval server for retrieving a content on a network such as WWW (World Wide Web) with use of the retrieval keyword.

The output unit 14 outputs the related content acquired by the related content acquisition unit 13. Specifically, the output unit 14 outputs the related content or identification information of the related content to the terminal 2. The output unit 14 may output it to another server or to the input/output device 103 of the related content retrieval device 1. Furthermore, the output unit 14 may output the related content and also output the posted text as the source of relation with the related content.

In outputting related contents acquired by the related content acquisition unit 13, the output unit 14 may specify a related content to be output, out of the related contents acquired, and output only the specified related content. In outputting related contents, the output unit 14 may output the related contents in a certain order or at random.

### [Example of Related Content Retrieval Device 1]

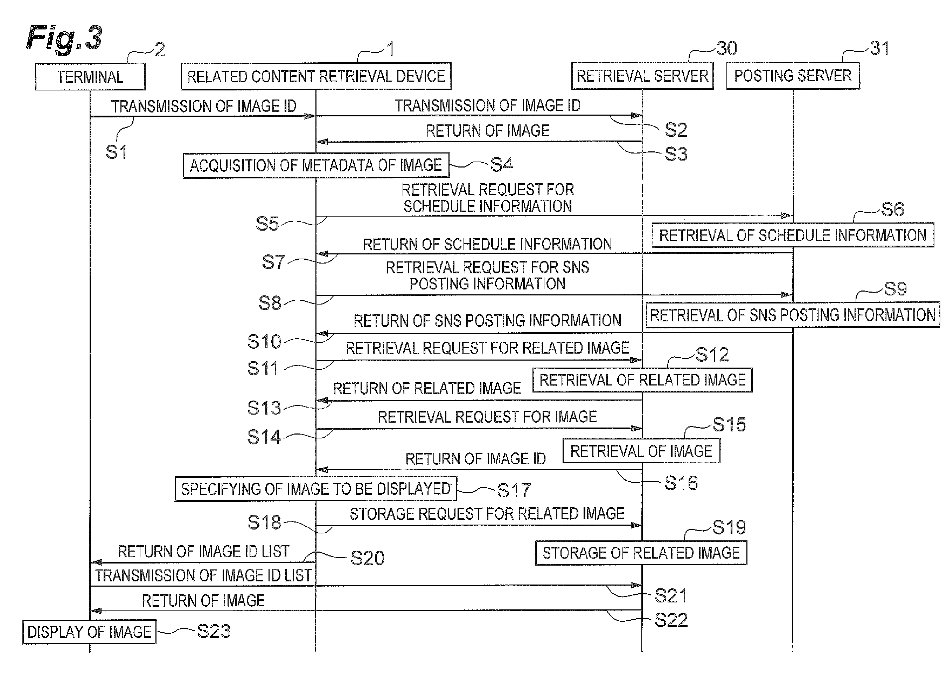

The following will describe an example of retrieval of related image with use of the terminal 2 and a processing procedure of a related content retrieval method in the related content retrieval device 1 according to the present embodiment, using the sequence diagram shown in Fig. 3.

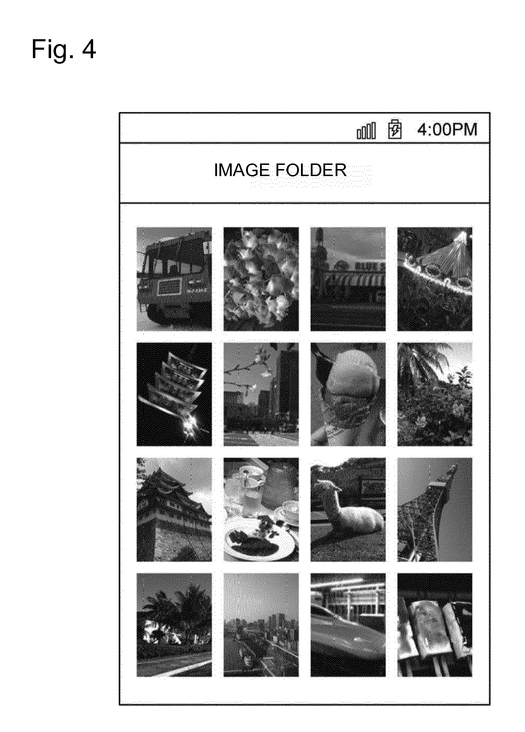

First, the terminal 2 sends an image ID for retrieval of a related image, to the related content retrieval device 1 (S1). Fig. 4 is a drawing showing a screen example in input of an image at the terminal 2. The screen example shown in Fig. 4 shows a screen example in which a plurality of images stored in an image folder are displayed in a thumbnail form, at the terminal 2. The user of the terminal 2 selects an image to which the user desires to retrieve a related image, on the screen example shown in Fig. 4. Then the terminal 2 sends an image ID of the selected image to the related content retrieval device 1.

Next, the input unit 10 implements input of the image ID sent in S1 (input step). Then the metadata acquisition unit 11 transmits the input image ID to the retrieval server 30 (S2), receives the image corresponding to the image ID from the retrieval server 30 (S3), and acquires the metadata of the image (S4, metadata acquisition step).

Next, the posted text acquisition unit 12 makes a retrieval request for schedule information to the posting server 31, using the metadata acquired in S4, as a retrieval keyword (S5), retrieval of schedule information is performed at the posting server 31 (S6), and the posted text acquisition unit 12 acquires the schedule information as the result of the retrieval (S7, posted text acquisition step). In S5 to S7, for example, the posted text acquisition unit 12 acquires an action schedule at the time of photography from the schedule server with use of the date and time of photography as the retrieval keyword, out of the metadata of the image.

Next, the posted text acquisition unit 12 makes a retrieval request for SNS posting information to the posting server 31, using the metadata acquired in S4, as a retrieval keyword (S8), retrieval of SNS posting information is performed at the posting server 31 (S9), and the posted text acquisition unit 12 acquires the SNS posting information as the result of the retrieval (S10, posted text acquisition step). In S8 to S10, for example, the posted text acquisition unit 12, using an SNS service name of an image posting destination as a retrieval keyword out of the metadata of the image, acquires a user posted content or posted comment from the SNS server indicated by the SNS service name of the image posting destination.

Next, the related content acquisition unit 13 makes a retrieval request for a related image to the retrieval server 30, using a retrieval keyword or keywords based on the schedule information and the SNS posting information acquired in S7 and S10 (S11), retrieval of related image is performed at the retrieval server 30 (S12), and the related content acquisition unit 13 acquires a related image or images as the result of the retrieval (S 13, related content acquisition step). In S11 to S13, for example, the related content acquisition unit 13 uses as retrieval keywords, a word or words included in the action schedule at the time of photography acquired in S7 and a word or words included in the user posted content or posted comment acquired in S10, to acquire a related image or related images from the retrieval server 30.

Next, the related content acquisition unit 13 makes a retrieval request for an image to the retrieval server 30, using as a retrieval keyword a tag included in the metadata acquired in S4 (S14), retrieval of image is carried out at the retrieval server 30 (S15), and the related content acquisition unit 13 acquires an image ID of each image as the result of the retrieval (S16).

Next, the output unit 14 specifies an image or images to be displayed, out of the images acquired in S 13 and S16 (S17). Then, the output unit 14 makes a storage request for the related image or images acquired in S13, out of the image or images specified in S17, to the retrieval server 30 (S18) and the related image or images are stored at the retrieval server 30 (S19). Next, the output unit 14 sends to the terminal 2 the action schedule at the time of photography acquired in S7 and the user posted content acquired in S10, together with an image ID list of the image or images specified in S 17 (S20, output step). It is noted that the output unit 14 may be configured to arrange specified images in a certain order in S17 and send an ordered image ID list thereof in S20.

Next, the terminal 2 sends the image ID list sent in S20, to the retrieval server 30 and the corresponding image or images are acquired from the retrieval server 30 (S22). Then, the terminal 2 displays the action schedule at the time of photography and the user posted content transmitted in S20, together with the image or images acquired in S22 (S23).

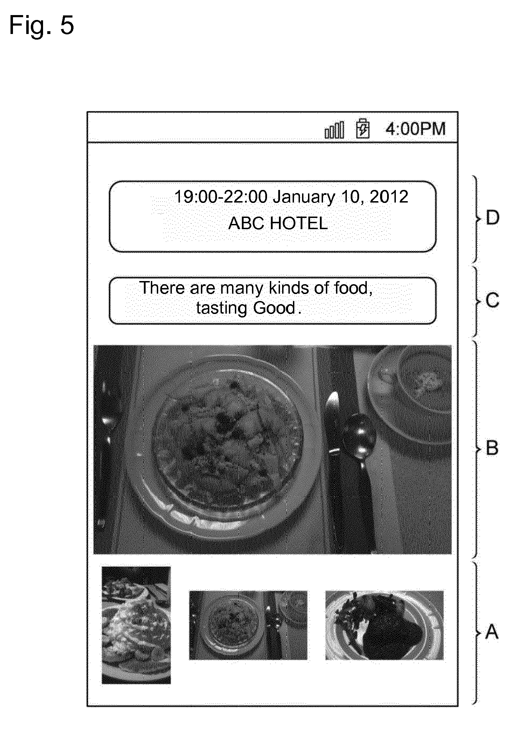

Fig. 5 is a drawing showing a screen example upon output of related images at the terminal 2. In the screen example shown in Fig. 5, region A displays a list of some of the images acquired in S22, in a horizontally-aligned thumbnail form. When the user horizontally flips the display screen in the region A on a touch panel, the images scroll to display other images out of the images acquired in S22, in the region A. Then the user selects one of the images displayed in the region A, whereupon the selected image is displayed in a larger size in region B. At the same time as the display of the image in the region B, posted texts related to the image are displayed in regions C and D. Specifically, Fig. 5 shows a display of the user posted content on the SNS server, which was transmitted in S20, in the region C and a display of the action schedule at the time of photography on the schedule server, which was transmitted in S20, in the region D.

It is noted that S5-7 and S8-10 may be carried out anytime in the duration after S4 and before S11, and may be executed in parallel. Furthermore, S14 to S16 may be carried out anytime in the duration after S4 and before S17.

### [Operational Effects of Related Content Retrieval Device 1]

The following will describe the operational effects of the related content retrieval device 1 configured as in the present embodiment.

In the related content retrieval device 1 of the present embodiment, first, the input unit 10 implements input of a content. Then the metadata acquisition unit 11 acquires the metadata of the input content. Thereafter, the posted text acquisition unit 12 acquires the posted text related to the acquired metadata, from the posting server 31 accumulating the user posted texts. Next, the related content acquisition unit 13 acquires the related content related to the acquired posted text, from the retrieval server 30 capable of retrieving a content on the network device 3. Then the output unit 14 outputs the related content thus acquired. By adopting this configuration, the related content to the input content is acquired and output based on the posted text on the posting server 31 related to the input content, whereby a wide variety of related contents can be retrieved based on the posted texts. Furthermore, the use of metadata also allows the retrieval of related contents to various contents such as images including no retrieval keyword of text data or the like.

Furthermore, in the related content retrieval device 1 of the present embodiment, the output unit 14 may be configured to output the related content and also output the posted text as the source of relation with the related content. By adopting this configuration, for example, the user can view the related content and the posted text as the source of relation with the related content together, and thus further obtain detailed information about the related content, with improvement in convenience of the user.

In the related content retrieval device 1 of the present embodiment, the related content acquisition unit 13 may be configured to generate a retrieval keyword, based on the posted text acquired by the posted text acquisition unit 12, and to perform retrieval using the generated retrieval keyword to acquire the related content from the retrieval server 30. By adopting this configuration, the retrieval of related content can be realized by preparing the retrieval server 30 a general retrieval function capable of retrieving a content with use of the retrieval keyword, whereby there is no need for preparing a dedicated retrieval function and the retrieval of related content can be carried out at low cost.

As described above, the related content retrieval device 1 of the present embodiment is a versatile retrieval device applicable to the whole of various contents, while being not limited to images only, and can also retrieve the related content from contents including no retrieval keyword. The related content retrieval device 1 can retrieve information potentially desired by the user.

### Reference Signs List

1... related content retrieval device; 2... terminal; 3... network; 4... related content retrieval system; 10... input unit; 11... metadata acquisition unit; 12... posted text acquisition unit; 13... related content acquisition unit; 14... output unit; 30... retrieval server; 31... posting server.

## Claims

1. A related content retrieval device comprising:
input means for implementing input of a content;
metadata acquisition means for acquiring metadata of the content input by the input means;
posted text acquisition means for acquiring a posted text related to the metadata acquired by the metadata acquisition means, from a posting server accumulating user posted texts;
related content acquisition means for acquiring a related content related to the posted text acquired by the posted text acquisition means, from a retrieval server capable of retrieving a content on a network; and
output means for outputting the related content acquired by the related content acquisition means.

2. The related content retrieval device according to claim 1, wherein the output means outputs the related content and also outputs the posted text as the source of relation with the related content.

3. The related content retrieval device according to claim 1 or 2, wherein the related content acquisition means generates a retrieval keyword, based on the posted text acquired by the posted text acquisition means, and performs retrieval using the generated retrieval keyword to acquire the related content from the retrieval server.

4. The related content retrieval device according to any one of claims 1 to 3,
wherein the posting server accumulates user's action schedules,
wherein the posted text acquisition means acquires an action schedule related to the metadata acquired by the metadata acquisition means, from the posting server, and
wherein the related content acquisition means acquires a related content related to the action schedule acquired by the posted text acquisition means, from the retrieval server.

5. The related content retrieval device according to claim 4,
wherein the input means implements input of an image,
wherein the metadata acquisition means acquires a date and time of photography as metadata of the image input by the input means, and
wherein the posted text acquisition means acquires an action schedule related to the date and time of photography acquired by the metadata acquisition means, from the posting server.

6. A related content retrieval method by a related content retrieval device, comprising:
an input step in which input means of the related content retrieval device implements input of a content;
a metadata acquisition step in which metadata acquisition means of the related content retrieval device acquires metadata of the content input in the input step;
a posted text acquisition step in which posted text acquisition means of the related content retrieval device acquires a posted text related to the metadata acquired in the metadata acquisition step, from a posting server accumulating user posted texts;
a related content acquisition step in which related content acquisition means of the related content retrieval device acquires a related content related to the posted text acquired in the posted text acquisition step, from a retrieval server capable of retrieving a content on a network; and
an output step in which output means of the related content retrieval device outputs the related content acquired in the related content acquisition step.
